# EUROPÄISCHE PATENTANMELDUNG

(11) **EP 1 371 856 A2**
(43) Veröffentlichungstag der Anmeldung: **17.12.2003**
(21) Anmeldenummer: 03101513.4
(22) Anmeldetag: 26.05.2003
(51) Int. Cl.: F15B 13/00, F16L 37/098

(54) **Pneumatikaggregat mit mindestens einer Anschlussbuchse für eine Druckmittelleitung**

(30) Priorität: 29.05.2002 DE 10223936
(71) Anmelder: Bosch Rexroth AG, 70442 Stuttgart (DE)
(72) Erfinder: Rühle, Wolfgang, 71606, Unterriexingen (DE)
(74) Vertreter: Kietzmann, Lutz

(57) **Zusammenfassung**

Pneumatikaggregat, insbesondere Mehrwegeventil oder Grundplattenelement, an dessen Gehäuse (1) mindestens eine schmale äußere Leitungsanschlussfläche (2) vorgesehen ist, an welcher mindestens eine Anschlussbuchse (3) über eine korrespondierende Grundbohrung (7) im Gehäuse (1) befestigt ist, wobei die Befestigung über mindestens eine im Wandbereich (X) der Grundbohrung (7) vorgesehene Ausnehmung (4a, 4b) erfolgt, die nach Art einer formschlüssigen Schnappverbindung mit mindestens einer hakenartigen Anformung (5a, 5b) an der in die Grundbohrung (7) druckdicht eingepasste Anschlussbuchse (3) zusammenwirkt.

## Beschreibung

Die vorliegende Erfindung betrifft ein Pneumatikaggregat, insbesondere ein Mehrwegeventil oder Grundplattenelement, an dessen Gehäuse mindestens eine schmale äußere Leitungsanschlussfläche vorgesehen ist, an welcher mindestens eine Anschlussbuchse für eine Druckmittelleitung über eine korrespondierende Grundbohrung im Gehäuse befestigt ist. Weiterhin betrifft die Erfindung eine Ventileinheit, bestehend aus mehreren solcher als Mehrwegeventile ausgebildeter Pneumatikaggregate.

Eine Ventileinheit wird durch eine örtliche Zusammenfassung mehrerer einzelner Mehrwegeventile zu einem Block gebildet. Dies ermöglicht eine zentrale Versorgung mit Speisedruck sowie elektrischen Ansteuersignalen. Von den einzelnen Mehrwegeventilen der Ventileinheit aus verlaufen entsprechende Druckmittelleitungen zu Druckmittelzylindern oder dergleichen, um diese mit Druckmittel zu beaufschlagen.

Eine gattungsgemäße, aus einzelnen pneumatischen Mehrwegeventilen bestehende Ventileinheit geht aus dem Produktkatalog "Know-how in Pneumatics" (Druck-Nr. 0001000601, Auflage 1998) der Rexroth Mecman GmbH, Hannover hervor. Jedes einzelne Mehrwegeventil weist im zusammengebauten Zustand mit einem dazugehörigen Grundplattenelement eine im Wesentlichen scheibenförmige Gestalt auf. Über die jeweils zwei parallel zueinander verlaufenden großen Ventilanschlussflächen erfolgt die Aneinanderreihung zur blockartigen Ventileinheit. Durch die gesamte Ventileinheit hindurch sind von Ventil zu Ventil Druckmittelkanäle zur Druckmittelversorgung und -entsorgung geführt. An einer oberen schmalen Anschlussfläche des Mehrwegeventils sind Pilotventile angeordnet, die ausgehend von einem elektrischen Signal dem Schalten des ventilintemen Ventilschiebers nach dem Prinzip einer Vorsteuerung dienen. Benachbart zu der oberen Anschlussfläche und benachbart zu den beiden großen Ventilanschlussflächen liegt eine vordere schmale Leitungsanschlussfläche, an der zwei Anschlussbuchsen für Druckmittelleitungen angeordnet sind.

Über diese Anschlussbuchsen lassen sich Druckmittelleitungen aus Kunststoff lösbar am Gehäuse befestigen. Hierfür ist das Gehäuse mit einer Grundbohrung zur Aufnahme der jeweiligen Anschlussbuchse versehen. Die Grundbohrung steht mit einem ventilinternen weiterführenden Druckmittelkanal in Verbindung. Die Anschlussbuchse ist in die Grundbohrung des Gehäuses fest eingepresst. Die Anschlussbuchse besteht im Wesentlichen aus einem äußeren Zylinderkörper, der mit der Grundbohrung im Gehäuse korrespondiert und nimmt einen aus Federblech bestehenden Hakenkranz auf, welcher derart widerhakenartig ausgebildet ist, dass sich das Ende einer aus Kunststoff bestehenden Druckmittelleitung hierin einschieben lässt, wobei die Haltekrallen sich außenradial in die Druckmittelleitung einschneiden, um so ein ungewolltes Lösen der Druckmittelleitung aus der Anschlussbuchse zu vermeiden. Das Lösen erfolgt durch Niederdrücken eines oberen Betätigungsringes, welcher die Haltekrallen von der Druckmittelleitung abrückt, so dass die Druckmittelleitung aus der Anschlussbuchse wieder herausziehbar ist.

Der Trend in der Pneumatik geht zu immer kompakteren Ventileinheiten, was besonders schmalbauende Mehrwegeventile und gegebenenfalls Grundplattenelemente erfordert. Die Breite des Pneumatikaggregats wird wesentlich durch die Einbaugeometrie der Anschlussbuchsen bestimmt. Zwischen der Grundbohrung zur Aufnahme einer Anschlussbuchse und den beidseits benachbarten Flächen muss eine gewisse Mindestwandstärke des Gehäuses verbleiben, damit das Einpressen einer Anschlussbuchse nicht zur Verformung der benachbarten Flächen führt, so dass diese sich nicht mehr exakt aneinander reihen lassen. Dieser konstruktiven Randbedingung steht das Bestreben entgegen, einen möglichst hohen Durchfluss durch das Pneumatikaggregat zu realisieren, was Druckmittelleitungen mit einem großen lichten Durchmesser sowie entsprechend große Anschlussbuchsen erfordert.

Es ist bereits versucht worden, anstelle der herkömmlichen Anschlussbuchsen, welche durch Einpressen im Gehäuse befestigt sind, solche Anschlussbuchsen zu verwenden, welche über äußere Halteklammern die Verbindung mit dem Gehäuse herstellen. Die Halteklammern sind im wesentlichen U-förmig gestaltet und greifen radial in eine Außennut an der Anschlussbuchse ein. Diese Lösung ist jedoch nur mit einem Mehraufwand an Bauteilen darstellbar. Weiterhin bleiben die Halteklammern im montierten Zustand von außen her zugänglich, was ein ungewolltes Lösen ermöglicht.

Es ist daher die Aufgabe der vorliegenden Erfindung ein Pneumatikaggregat der vorstehend beschriebenen Art dahingehend weiter zu verbessern, dass trotz Schmalbau eine Anschlussleitung mit möglichst großer lichter Weite hieran zuverlässig und einfach befestigbar ist.

Die Aufgabe wird ausgehend von einem Pneumatikaggregat gemäß dem Oberbegriff von Anspruch 1 in Verbindung mit dessen kennzeichnenden Merkmalen gelöst. Hinsichtlich einer pneumatischen Ventileinheit wird die Aufgabe durch Anspruch 7 gelöst. Die abhängigen Ansprüche geben vorteilhafte Weiterbildungen der Erfindung wieder.

Die Erfindung schließt die technische Lehre ein, dass in den Wandbereich der die Anschlussbuchse aufnehmenden Grundbohrung mindestens eine Ausnehmung vorgesehen ist, die nach Art einer formschlüssigen Schnappverbindung mit einer hakenartigen Anformung an der in die Grundbohrung eingepassten Anschlussbuchse zusammenwirkt.

Der Vorteil der erfindungsgemäßen Lösung liegt insbesondere darin, dass durch Abkehr vom Prinzip der herkömmlichen kraftschlüssigen Befestigung der Einpressbuchse ein formschlüssig funktionierendes Prinzip nutzbar gemacht wird. Bei der speziellen formschlüssigen Lösung wird auf die Wandung der Grundbohrung nur wenig Kraft in Radialrichtung ausgeübt, so dass es nicht zu Verformungen bei geringen Wandstärken zwischen der Grundbohrung und den benachbarten Ventilanschlussflächen kommen kann. Da insoweit nur eine geringe Wandstärke erforderlich ist, um eine zuverlässige Verbindung zwischen der Anschlussbuchse und dem Gehäuse herzustellen, kann das Gehäuse insgesamt recht schmalbauend ausgeführt werden. Zum Sichern der Anschlussbuchse in der montierten Position sind zudem keine zusätzlichen Bauteile erforderlich. Eine Montage ist manuell, ohne Zuhilfenahme einer montagekrafterzeugenden Hilfsvorrichtung möglich.

Gemäß einer die Erfindung verbessernden Maßnahme ist vorgesehen, dass die mindestens eine in den Wandbereich der Grundbohrung eingebrachte Ausnehmung als Durchbruch ausgehend von der Grundbohrung zur benachbarten Ventilanschlussfläche ausgebildet ist.

Über die durchbruchartige Ausbildung der Ausnehmung ist der montierte Zustand der Anschlussbuchse von außen her sichtbar, was eine einfache Qualitätskontrolle ermöglicht. Es ist lediglich eine Sichtprüfung vorzunehmen, um festzustellen, ob die hakenartige Anformung der Ventilbuchse korrekt in die Ausnehmung des Gehäuses zum Eingriff gekommen ist. Die hakenartike Anformung an der Anschlussbuchse kann beispielsweise auch aus einer tannenbaumförmigen Außenverzahnung resultieren.

Vorzugsweise sollten aus Stabilitätsgründen genau zwei einander gegenüberliegende Ausnehmungen vorgesehen werden, die dann je einer der beiden gegenüberliegenden Ventilanschlussflächen des Gehäuses zugeordnet sind. Korrespondierend hierzu weist dann die Anschlussbuchse ebenfalls zwei einander gegenüberliegende hakenartige Anformungen auf. Hierdurch wird die Sicherheit der Verbindung zwischen der Anschlussbuchse und dem Gehäuse erheblich verbessert.

Um zu verhindern, dass Druckluft aus dem Inneren des Gehäuses über den Spalt zwischen der Grundbohrung des Gehäuses und der Anschlussbuchse hindurch abströmen kann, ist gemäß einer weiteren die Erfindung verbessernden Maßnahme vorgesehen, dass zwischen dem Bodenbereich der Grundbohrung einerseits und einer gegenüberliegenden Stirnfläche der Anschlussbuchse andererseits ein elastischer Dichtring angeordnet ist, der eine radiale Abdichtung einer in die Anschlussbuchse eingeschobenen Druckmittelleitung gegenüber der Grundbohrung gewährleistet. Der elastische Dichtring kann gehäuseseitig an einem Absatz zur Anlage kommen, welcher durch den größeren Durchmesser der Grundbohrung und den sich hieran anschließenden kleineren Durchmesser des ventilintemen Kanals gebildet ist.

Weitere die Erfindung verbessernde Maßnahmen werden nachfolgend gemeinsam mit der Beschreibung eines bevorzugten Ausführungsbeispiels der Erfindung anhand der Figuren näher dargestellt. Es zeigt:
- Fig. 1: eine Detailansicht auf die Schmalseite eines Gehäuses von einem Pneumatikaggregat mit hieran befestigter Anschlussbuchse, und
- Fig. 2: einen Längsschnitt A-A durch den Bereich der Anschlussbuchse im montierten Zustand gemäß Fig. 1.

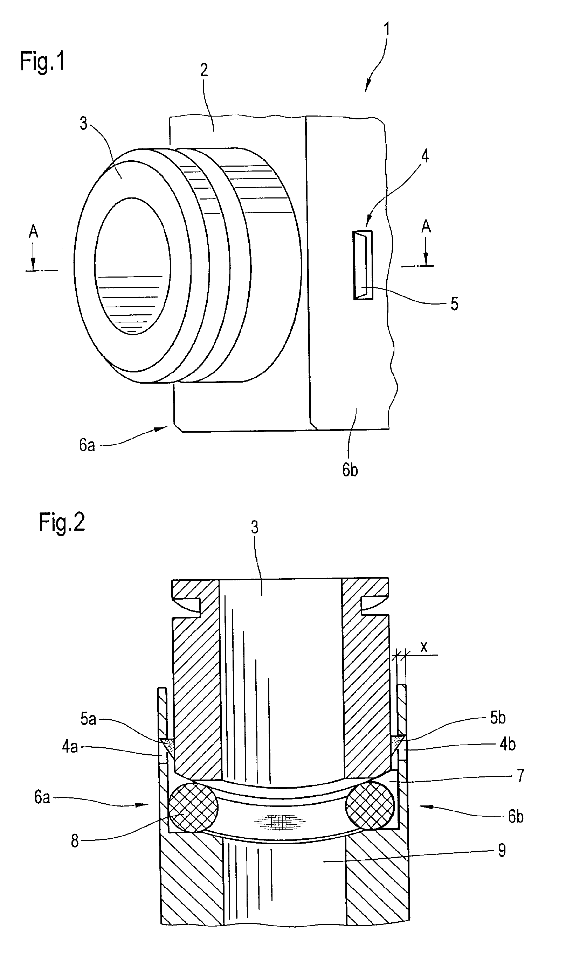

Das teilweise in der Fig. 1 dargestellte Pneumatikaggregat besitzt ein Gehäuse 1, das eine schmale äußere Leitungsanschlussfläche 2 aufweist. An der Leitungsanschlussfläche 2 ist eine - hier exemplarische - Anschlussbuchse 3 angeordnet. Über die Anschlussbuchse 3 sind vom Pneumatikaggregat ausgehende - nicht weiter dargestellte - Druckmittelleitungen lösbar am Gehäuse 1 in herkömmlicher Weise anschließbar. Die Anschlussbuchse 3 wird über eine Ausnehmung 4 am Gehäuse 1 formschlüssig fixiert. Die Ausnehmung 4 korrespondiert mit einer hakenartigen Anformung 5 seitens der Anschlussbuchse 3. Die Ausnehmung 4 und die hakenartige Anformung 5 bilden gemeinsam eine formschlüssige Schnappverbindung. Die Ausnehmung 4 bildet einen Durchbruch zu zwei parallelen Ventilanschlussflächen 6a, 6b, welche orthogonal benachbart zur schmalen Leitungsanschlussfläche 2 liegen. Über die demgegenüber großflächigen Ventilanschlussflächen 6a, 6b sind mehrere gleichartige Pneumatikaggregate aneinanderreihbar.

Gemäß Fig. 2 ist die hier nur prinzipiell im Schnitt dargestellte Anschlussbuchse 3 über eine im Gehäuse 1 eingebrachte Grundbohrung 7 befestigt. In den beiden zu den Ventilanschlussflächen 6a, 6b benachbarten Wandbereichen X der Grundbohrung 7 sind die durchbruchartigen Ausnehmungen 4a, 4b eingebracht. Diese wirken mit zwei korrespondierenden hakenartigen Anformungen 5a, 5b der Anschlussbuchse 3 unter Bildung einer formschlüssigen Schnappverbindung zusammen. Zwischen dem Bodenbereich der Grundbohrung 7, und der diesem gegenüberliegenden Stirnfläche der Anschlussbuchse 3 ist ein elastischer Dichtring 8 angeordnet, um ein Abströmen des aus einem ventilintemen Kanals 9 stammenden Druckmittels außen entlang der Anschlussbuchse 3 innerhalb der Grundbohrung 7 zu vermeiden.

Wegen der erfindungsgemäßen formschlüssigen Befestigung der Anschlussbuchse 3 am Gehäuse 1 braucht der Wandbereich X nur minimal zu sein, so dass das Gehäuse 1 insgesamt recht schmalbauend ausgeführt werden kann.

### Bezugszeichenliste

- **1**: Gehäuse
- **2**: Leitungsanschlussfläche
- **3**: Anschlussbuchse
- **4**: Ausnehmung
- **5**: Hakenartige Anformung
- **6**: Ventilanschlussfläche
- **7**: Grundbohrung
- **8**: Dichtring
- **9**: Kanal

## Patentansprüche

1. Pneumatikaggregat, insbesondere Mehrwegeventil oder Grundplattenelement, an dessen Gehäuse (1) mindestens eine schmale äußere Leitungsanschlussfläche (2) vorgesehen ist, an welcher mindestens eine Anschlussbuchse (3) über eine korrespondierende Grundbohrung (7) im Gehäuse (1) befestigt ist,
**dadurch gekennzeichnet, dass** die Befestigung über mindestens eine im Wandbereich (X) der Grundbohrung vorgesehene Ausnehmung (4a, 4b) erfolgt, die nach Art einer formschlüssigen Schnappverbindung mit mindestens einer hakenartigen Anformung (5a, 5b) an der in die Grundbohrung (7) druckdicht eingepasste Anschlussbuchse (3) zusammenwirkt.

2. Pneumatikaggregat nach Anspruch 1,
**dadurch gekennzeichnet, dass** das Gehäuse (1) beidseits orthogonal benachbart zur schmalen Leitungsanschlussfläche (2) zwei parallel zueinander verlaufende große Ventilanschlussflächen (6) zur Bildung einer Ventileinheit durch Aneinanderreihung mehrerer Gehäuse (1) über die Ventilanschlussflächen (6) aufweist.

3. Pneumatikaggregat nach Anspruch 1,
**dadurch gekennzeichnet, dass** die mindestens eine in den Wandbereich (X) der Grundbohrung (7) eingebrachte Ausnehmung (4a, 4b) als Durchbruch ausgehend von der Grundbohrung (7) zu einer Ventilanschlussfläche (6) ausgebildet ist, so dass der montierte Zustand der Anschlussbuchse innerhalb der Grundbohrung (7) von außen her sichtbar ist.

4. Pneumatikaggregat nach Anspruch 3,
**dadurch gekennzeichnet, dass** genau zwei, einander gegenüberliegende, durchbruchartige Ausnehmungen (4a, 4b) vorgesehen sind, die je einer der beiden Ventilanschlussflächen (6a, 6b) zugeordnet sind.

5. Pneumatikaggregat nach einem der vorstehenden Ansprüche,
**dadurch gekennzeichnet, dass** zwischen einem Bodenbereich der Grundbohrung (7) einerseits und einer gegenüberliegenden Stirnfläche der Anschlussbuchse (3) andererseits ein elastischer Dichtring (8) angeordnet ist, der eine radiale Abdichtung einer in die Anschlussbuchse (3) eingeschobenen Druckmittelleitung gegenüber der Grundbohrung (7) gewährleistet.

6. Pneumatikaggregat nach einem der vorstehenden Ansprüche,
**dadurch gekennzeichnet, dass** das Gehäuse (1) aus einem spritzgegossenen Kunststoff hergestellt ist und zumindest der äußere Grundkörper der Anschlussbuchse (3) aus Metall besteht.

7. Pneumatische Ventileinheit, mit mehreren Pneumatikaggregaten, gemäß einem der vorstehenden Ansprüche.
